# EUROPEAN PATENT APPLICATION

(11) **EP 1 577 100 A1**
(43) Date of publication of application: **21.09.2005**
(21) Application number: 03780818.5
(22) Date of filing: 17.12.2003
(51) Int. Cl.: B41J 5/30, B41J 29/38, B41J 29/46, H04N 1/00, H04N 1/21

(54) **PRINT CONTROL DEVICE AND PRINT CONTROL METHOD**

(30) Priority: 19.12.2002 JP 2002367977
(71) Applicant: MATSUSHITA ELECTRIC INDUSTRIAL CO., LTD., Osaka 571-8501 (JP)
(72) Inventor: KAMEI, Tatsuo, Suita-shi, Osaka 564-0023 (JP)
(74) Representative: Pautex Schneider, Nicole Véronique
(86) International application number: PCT/JP2003/016149
(87) International publication number: WO 2004/056578

(57) **Abstract**

A print control device (100), which prevents a print range from being limited, is comprised of: a division unit (101a) that obtains print data (401) and divides it into a plurality of divided data files (104a); a R/W unit (101b) that reads/writes the plurality of divided data files 104a to/from a storage unit (104); a detection unit (101c) that detects if the reading performed by the R/W unit (101b) has been performed successfully or not for each of the divided data files (104a); and a file processing unit (101d) that outputs, to a printer engine (200), a divided data file (104a) that has been detected as being read out successfully, and causes it to print contents included in such divided data file (104a) out of the contests included in the print data (401).

## Description

### Technical Field

The present invention relates to a print control device included, for example, in a printer, and particularly to a print control device that previously stores print data obtained from a host computer or the like and performs printing using such stored print data, without needing to obtain the print data again.

### Background Art

In general, a printer includes a printer engine that performs printing based on print data and a print control device that controls the printer engine.

Such a print control device obtains, from an outside host computer and the like, print data indicating sentences and drawings to be printed, and temporarily stores such print data into the memory. Then, the print control device performs print processes such as reading the print data stored in a memory and causing the printer engine to print the contents indicated by such print data, as well as deleting the print data used for said printing after completion of the printing.

However, since the above conventional print control device handles print data obtained from the host computer as a single file, there occurs the following problem in the case where there is a defect related to the reading of a part of such print data: the whole contents included in the print data cannot be printed; or only the contents up to a point of the defect can be printed. Such a defect is attributable, for example, to use environment, age deterioration, and mechanical vibration.

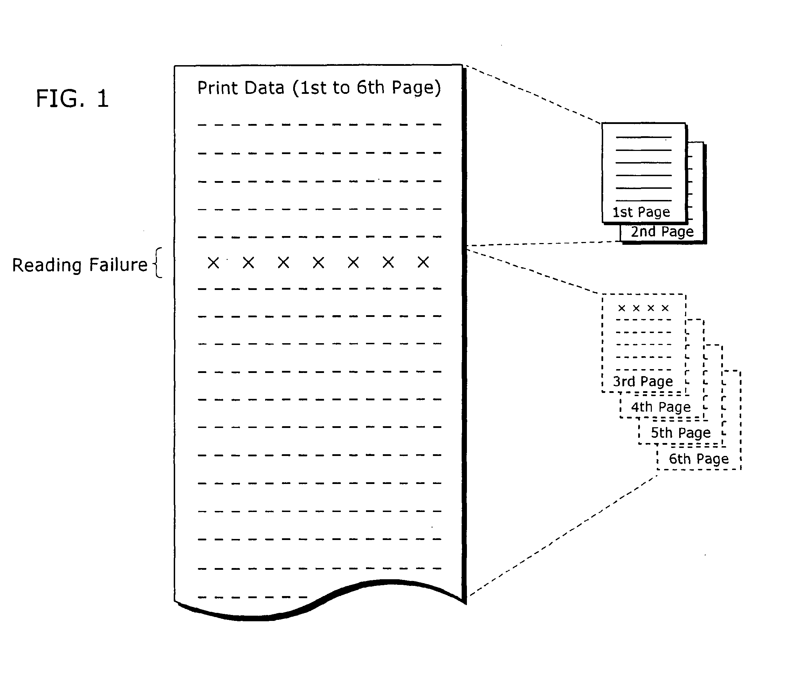

FIG. 1 is a diagram illustrating the problem with the above conventional print control device.

As shown in FIG. 1, for example, when attempting to read out print data that includes print contents from the first to sixth pages, the print control device can cause the printer engine to print the first and second pages, when there is a reading failure at a point corresponding to the third page, but cannot cause the printer engine to print contents from the third page onward.

Such a problem is notable in print control devices with memory print function.

A print control device with memory print function has a large capacity memory and previously writes, into such large capacity memory, some print data scheduled to be used for printing (for example, see Japanese Laid-Open Patent Application No. 5-27929, Japanese Laid-Open Patent Application No. 9-24070, and Japanese Laid-Open Patent Application No. 11-191041). As a result, while such print control device can complete print processing in a short time by saving the time required for data transfer from the host computer as well as for data expansion, there is a higher probability that defects attributable to the above-described use environment, aged deterioration, and mechanical vibration occur in proportion to the length of time for which print data remains stored in the large capacity memory.

The present invention has been conceived in view of solving the above problem, and it is an object of the present invention to provide a print control device and a print control method that are capable of preventing a print range from being limited due to a defect related to a part of print data.

### Disclosure of Invention

In order to achieve the above object, the print control device according to the present invention is a print control device for controlling a printer engine that prints contents based on print data indicating the contents to be printed, said device being comprised of: a division unit that obtains the print data from outside the print control device, and divides the obtained print data into a plurality of files; a storage unit having an area for storing the files; a read and write unit that writes, into the storage unit, the plurality of files obtained by the dividing performed by the division unit, and reads out the plurality of files stored in the storage unit that correspond to the print data; a detection unit that detects, on a file-by-file basis, whether or not the reading has been successfully performed by the read and write unit; and a file processing unit that outputs, to the printer engine, a file that has been detected by the detection unit as being read out successfully, and causes the printer engine to print contents included in the file that has been detected as being read out successfully, out of the contents included in the print data. For example, the division unit divides the obtained print data into individual pages so as to generate, as one file, each information included in each of the pages.

Accordingly, the print data is stored in the storage unit as a plurality of divided files. Therefore, when printing based on such print data is to be performed and when a defect occurs related to the reading of a part of the data, since print contents included in all the files excluding a file of the defect are to be printed, it becomes possible to limit a range of data that cannot be printed successfully only to a range of contents included in the file of the defect.

In other words, when a reading defect related to a part of data occurs, the conventional technique is not capable of printing any print contents included in the print data that follows such defect part. However, the print control device according to the present invention is capable of printing print contents even if such print contents are ones included in print data that follow the defect part, as long as they are included in files other than the file of the defect. As a result, it becomes possible to prevent the print range from being limited due to a defect related to a part of the print data. Here, in the case where the print data is divided into individual pages, it becomes possible to successfully print all the pages other than the one where a reading defect occurs.

Furthermore, the division unit may divide the obtained print data into individual areas smaller than page so as to generate, as one file, each information included in each of the areas. Accordingly, it becomes possible to further prevent the print range from being limited compared with the case where the print data is divided into individual pages.

Moreover, the print control device may further include an error file processing unit that causes the printer engine to perform a predetermined process on a file that has been detected by the detection unit as not being read out successfully. For example, as the predetermined process, the error file processing unit may cause the printer engine to output a page as a blank page, said page corresponding to the file that has not been read out successfully.

With the above structure in which a page corresponding to a file where a reading defect has occurred is outputted as a blank page, it becomes possible to inform the user that a defect has occurred.

Here, as the predetermined process, the error file processing unit may cause the printer engine to print a message onto a page corresponding to the file that has not been read out successfully, said message informing a user that the print data cannot be read out successfully.

With the above structure in which a message that informs the user that the print data cannot be read out successfully, it becomes possible for the user to easily know the occurrence of a defect.

Furthermore, as the predetermined process, the error file processing unit may prohibit the printer engine from outputting a page corresponding to the file that has not been read out successfully.

Accordingly, since no page is allowed to be outputted needlessly, it becomes possible to save printing papers.

Moreover, as the predetermined process, the error file processing unit may cause the printer engine to forcefully print, onto a page corresponding to the file that has not been read out successfully, the contents of the file read out by the read and write unit.

Here, the print control device may further include a process selection unit that prompts a user to select a process to be performed on the file that has been detected by the detection unit as not being read out successfully, and in the print control device, the error file processing unit may cause the printer engine to perform the process selected by the user via the process selection unit. For example, the process selection unit may present, as a candidate for the selection, that the contents read out by the read and write unit should be forcefully printed for the file that has not been read out successfully.

Accordingly, since a process selected by the user is to be executed, it becomes possible to improve the usability.

Furthermore, the division unit may obtain the print data from outside the print control device, and when any of the pages included in the print data is specified, may generate information included only in the specified page as a file, out of all information included in the obtained print data, and the read and write unit may write said generated file into the storage unit.

Accordingly, since only a file corresponding to a specified page is written into the storage unit rather than simply writing a plurality of files that include all the contents included in the print data, it becomes possible to further improve the usability.

Here, the detection unit may specify, to the division unit, a page corresponding to a file that has been found as not being read out successfully as a result of the detection, and the read and write unit may write, into the storage unit, the file that is generated by the division unit based on the specification, so that said generated file replaces the file that has not been read out successfully.

Accordingly, since a file that failed to be read out successfully is replaced by a new file that is generated from the print data, it becomes possible to recover such file that has failed to be read out successfully, as well as to further improve the usability.

Note that it is also possible to embody the present invention as a print control method performed by the print control device, as a program causing a computer to execute such method, as a recording medium storing such program, and as a printer that is equipped with the print control device.

### Brief Description of Drawings

FIG. 1 is a diagram illustrating the problem with the conventional print control device.
FIG. 2 is a structure diagram showing a structure of a print system according to an embodiment of the present invention.
FIG. 3 is a block diagram showing an internal structure of a printer according to the present invention.
FIG. 4 is a diagram illustrating how a division unit of a control unit divides print data to generate divided data files according to the present invention.
FIG. 5 is a flowchart showing operations performed by the division unit according to the present invention.
FIG. 6 is a diagram illustrating error file processing for printing a defect message according to the present invention.
FIG. 7 is a flowchart showing processing operations performed by a file processing unit of the control unit according to the present invention.
FIG. 8 is a diagram illustrating error file processing of prohibiting a page corresponding to an error file from being outputted according to the present invention.
FIG. 9 is a diagram showing an example screen display of a display unit when an error file processing is executed according to the present invention.

### Best Mode for Carrying Out the Invention

Hereafter, a print control device according to the embodiment of the present invention is described with reference to the drawings.

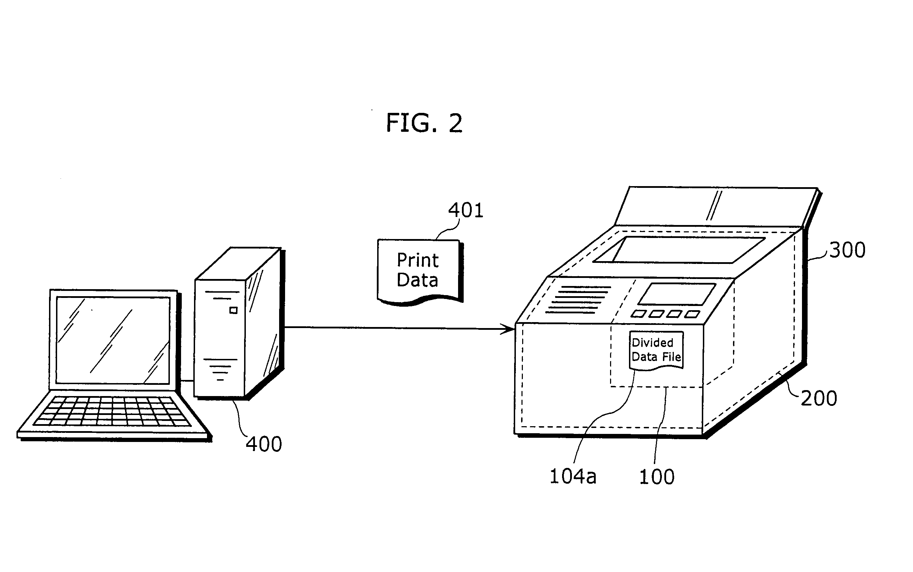

FIG. 2 is a structure diagram showing a structure of a print system according to the embodiment of the present invention.

The print system includes a host computer 400 which generates and outputs print data 401 indicating print contents such as sentences and drawings, and a printer 300 which obtains the print data 401 from the host computer 400 and prints the print contents indicated by the print data 401.

The host computer 400 displays, when it outputs the print data 401 to the printer 300, in advance, a memory inquiry screen for inquiring a user about whether or not the print data 401 should be stored in the printer 300. The host computer 400 then outputs, when it receives an instruction by the user's operation that the print data 401 should be stored in the printer 300, to the printer 300, a memory execution signal indicating the details of the instruction, together with the print data 401.

The printer 300 includes a printer engine 200 to perform printing based on the print data 401 and a print control device 100 to control the printer engine 200.

The printer 300 according to the present embodiment has a so-called memory print function and stores some print data 401 used for printing. Having such memory print function, the printer 300 can perform printing in a short time, saving time required for data transfer from the host computer 400 as well as for data expansion.

The print control device 100 according to the present invention, when receiving print data 401 and a memory execution signal from the host computer 400, stores such print data 401 as a plurality of divided data files 104a (files), rather than handling such print data 401 as a single file as in the case of the conventional technique. Then, the print control device 100 outputs these divided data files 104a to the printer engine 200 so as to cause it to print the print contents included in the print data 401, and keeps storing such plurality of divided data files 104a without deleing them, so that printing based on such print data 401 will be performed quickly next time.

Furthermore, when receiving only print data 401 from the host computer 400 without a memory execution signal, the print control device 100 temporarily stores such print data 401 as a plurality of divided data files 104a, as in the above case. Then, the print control device 100 outputs these divided data files 104a to the printer engine 200 so as to cause it to print the print contents included in the print data 401, and then deletes such plurality of divided data files 104a.

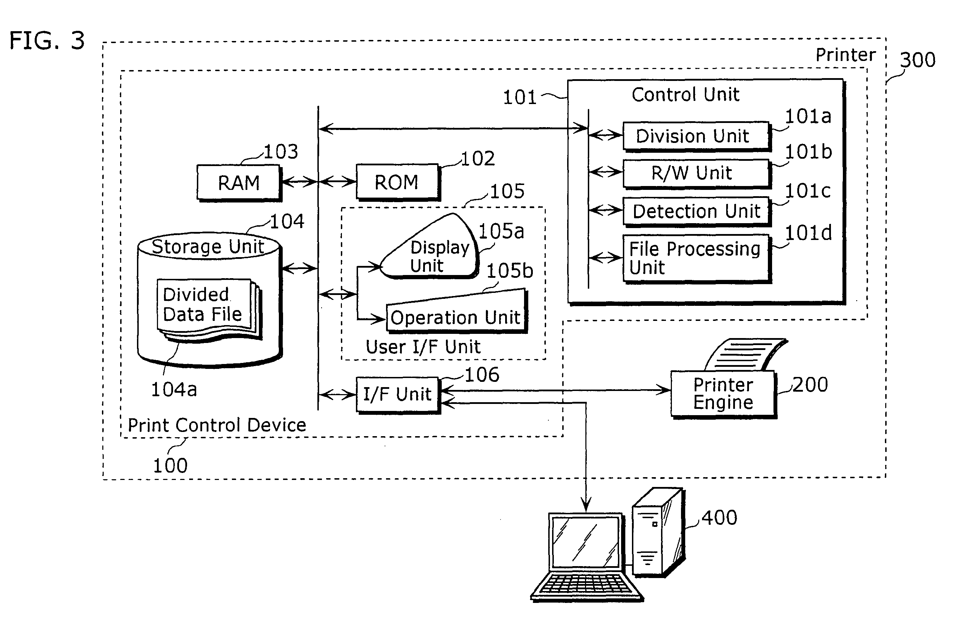

FIG. 3 is a block diagram showing an internal structure of the printer 300.

The print control device 100 of the printer 300 includes a control unit 101 composed of a Central Processing Unit (CPU) and the like, a Read Only Memory (ROM) 102 that stores, in advance, a program for print control to be executed by the control unit 101, a Random Access Memory (RAM) 103 to and from which the control unit 101 temporarily stores data and reads out the data, a storage unit 104 having an area for storing the above divided data files 104a, a user I/F unit 105 that serves an interface between the user and the control unit 101, and an I/F unit 106 that serves an interface between a device outside the print control device 100 and the control unit 101.

The user I/F unit 105 has a display unit 105a with, for example, a liquid crystal display screen on which operation details and setting details of the printer 300 are displayed, and an operation unit 105b with operation buttons and the like to be operated by the user.

The storage unit 104 is a large capacity memory that can store a relatively large amount of information and is configured with a hard disk drive, a non-volatile semiconductor memory and the like. Note that, the storage unit 104 may be configured with a drive having a DVD, a CD and a MO.

The control unit 101 according to the present embodiment is comprised of: a division unit 101a that divides print data 401 into a plurality of divided data files 104a; a R/W unit 101b that serves as means for reading and writing the divided data files 104a to and from the storage unit 104; a detection unit 101c that detects whether reading by the R/W unit 101b has been successfully performed or not; and a file processing unit 101d that processes the divided data files 104a read out by the R/W unit 101b.

The detection unit 101c detects whether the divided data files 104a stored in the storage unit 104 have been read out successfully or not based on, for example, a data read error that from the R/W unit 101b on a per-sector basis.

The division unit 101a, when obtaining the print data 401 from the host computer 400 via the I/F unit 106, divides such print data 401 into individual pages, and generates data included in each of such pages as one divided data file 104a. More specifically, the division unit 101a generates data included on the first page of the print data 401 as one divided data file 104a and generates data included on the second of the print data 401 as another divided data file 104a

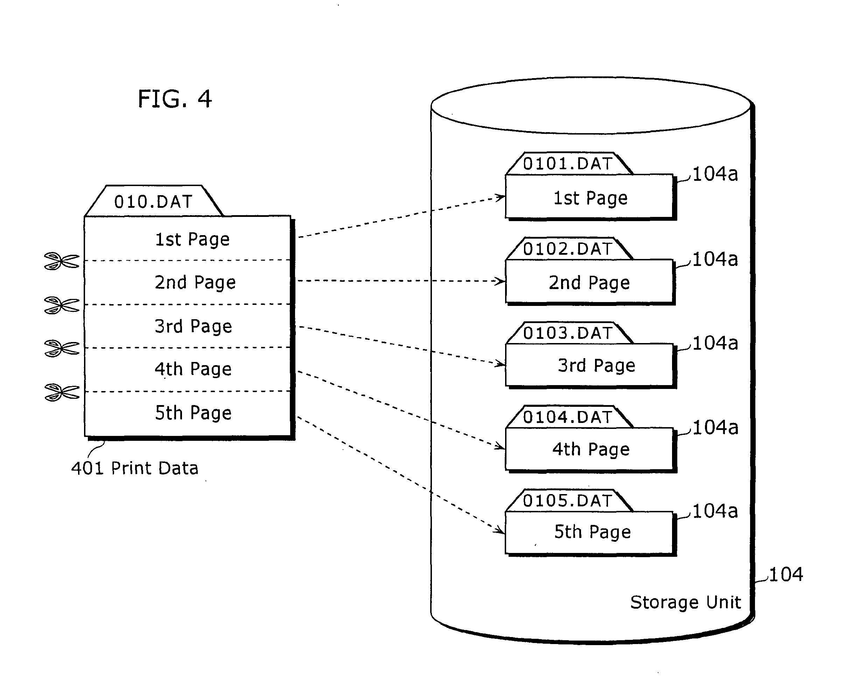

FIG. 4 is a diagram illustrating how the division unit 101a divides print data 401 to generate divided data files 104a.

When obtaining print data 401 that contains five pages and that has an identification name "010. DAT", for example, the division unit 101a divides such print data 401 into individual pages and generates the following: a divided data file 104a with an identification name "0101. DAT" containing the first page of the print data 401; a divided data file 104a with an identification name "0102. DAT" containing the second page of the print data 401; a divided data file 104a with an identification name "0103. DAT" containing the third page of the print data 401; a divided data file 104a with an identification name "0104. DAT" containing the fourth page of the print data 401; and a divided data file 104a with an identification name "0105. DAT" containing the fifth page of the print data 401.

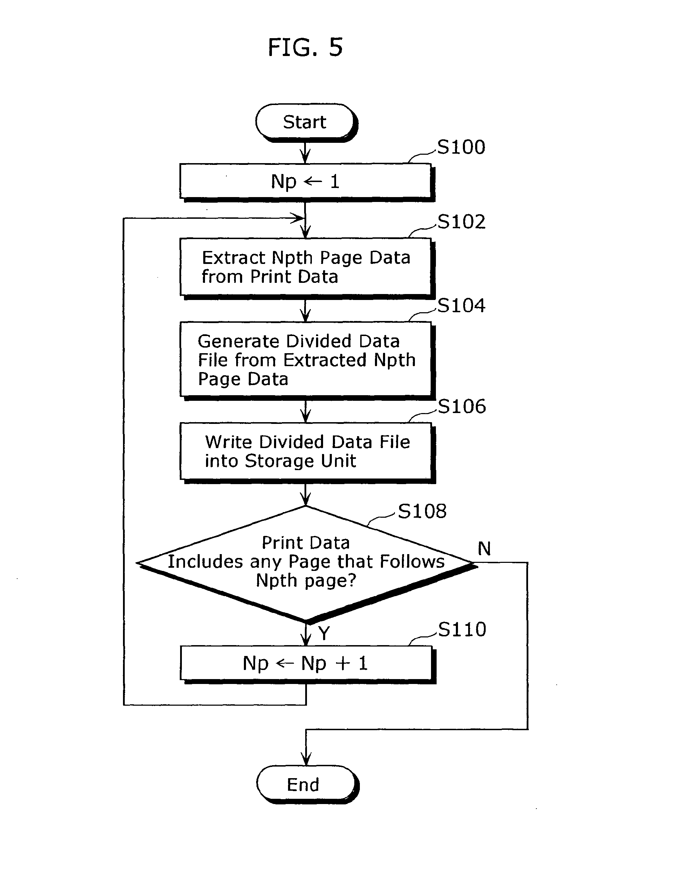

FIG. 5 is a flowchart showing operations performed by the division unit 101a.

First, the division unit 101a initializes the count number Np of a built-in counter to 1 (Step S100), and extracts the Np^{th} page data from the print data 401 (Step S102).

Next, the division unit 101a generates one divided data file 104a from the extracted Np^{th} page data (Step S104). In so doing, as shown in FIG. 4, the division unit 101a assigns, to such divided data file 104a, an identification name to identify this divided data file 104a. For example, in the case where print data 401 has an identification name "010. DAT", the division unit 101a assigns, to such divided data file 104a, an identification name "010Np. DAT" that is obtained by adding Np to "010. DAT".

Then, the division unit 101a causes the R/W unit 101b to write such generated divided data file 104a into the storage unit 104 (Step S106).

After such writing into the storage unit 104 completes, the division unit 101a judges whether the print data 401 includes a page that follows the Np^{th} page (Step S108). When judging that there is a following page (Y in Step S108), the division unit 101a updates the count number Np by adding 1 (Step S110), and repeatedly performs the operations starting from Step S102 again. Meanwhile, when judging that there is no following page (No in Step S108), the division unit 101a terminates the above processing operations.

Through the above operations performed by the division unit 101a, print data 401 obtained from the host computer 400 is stored into the storage unit 104 in the form of a plurality of divided data files 104a.

The file processing unit 101d of the control unit 101 causes the R/W unit 101b to read out the divided data files 104a stored in the storage unit 104. More specifically, in the case where only print data 401 is transmitted from the host computer 400 without a memory execution signal and where such print data 401 is temporarily written into the storage unit 104 as a plurality of divided data files 104a, the file processing unit 101d causes the R/W unit 101b to read out such plurality of divided data files 104a from the storage unit 104. Furthermore, in the case where the user operates the operation unit 105b so that printing will be performed based on print data 401 stored in advance in the storage unit 104, and the operation unit 105b outputs a signal corresponding to such operation, the file processing unit 101d causes the R/W unit 101b to read out, from the storage unit 104, a plurality of divided data files 104a corresponding to the user-requested print data 401. When this is done, the detection unit 101c detects whether the reading by the R/W unit 101b has been performed successfully or not for each divided data file 104a.

Then, the file processing unit 101d causes the printer engine 200 to output divided data files 104a that have been detected by the detection unit 101d as being read out successfully, and causes the printer engine 200 to print data included in the divided data files 104a that have been read successfully, out of the print contents included in the print data 401.

Stated another way, even when there occurs a defect related to the reading of one of a plurality of divided data files 104a corresponding to print data 401, all print contents included in the other divided data files 104a will be printed. In other words, all pages will be printed except for a page corresponding to a divided data file 104a where a defect occurs.

With the above structure, there is no possibility that a print range is largely limited due to a defect related to the reading of a part of print data 401 as seen in the conventional technique. Thus, it becomes possible to prevent a print range from being limited due to such defect.

Furthermore, the file processing unit 101d of the control unit 101 according to the present embodiment causes the printer engine 200 to perform error file processing to be described later on a divided data file 104a that has been detected by the detection unit 101d as not being read out successfully (such divided data file 104a is hereinafter referred to as an error file). In other words, such file processing unit 101d according to the present embodiment also serves as error file processing means in addition to file processing means.

As error file processing, for example, the file processing unit 101d causes the printer engine 200 to print, on a page corresponding to an error file, a defect message that informs the user that print data 401 has not been read successfully.

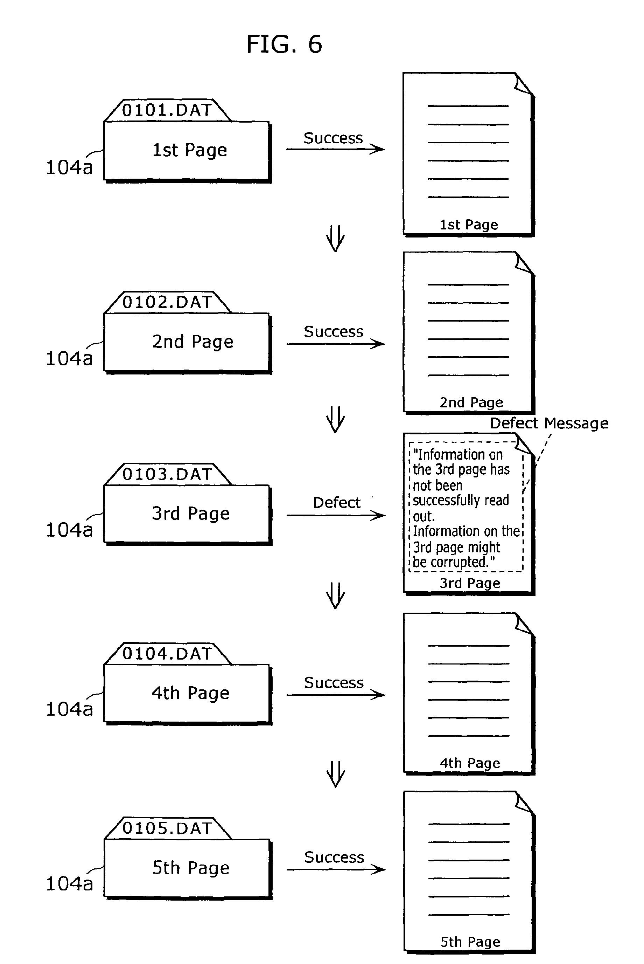

FIG. 6 is a diagram illustrating error file processing for printing a defect message.

For example, in the case where the file processing unit 101d causes divided data files 104a with identification names "0101. DAT" to "0105. DAT" that constitute one print data 401 to be read from the storage unit 104 and causes the printer engine 200 to print them and where there occurs a defect related only to the reading of the divided data file 104a with the identification name "0103. DAT", the file processing unit 101d writes a defect message onto the third page and causes the printer engine 200 to print it out.

More specifically, the file processing unit 101d causes the R/W unit 101b to sequentially read out the divided data file 104a with the identification name "0101. DAT" and the divided data file 104a with the identification name "0102. DAT". When they have been read out successfully, the file processing unit 101d causes these divided data files 104a to be outputted to the printer engine 200. As a result, the contents based on such divided data files 104a are printed onto the first and second pages.

Next, when the file processing unit 101d causes the R/W unit 101b to read out the divided data file 104a with the identification name "0103. DAT" and the detection unit 101c detects that such reading has not been performed successfully, the file processing unit 101d causes the printer engine 200 to print, on the third page, such a defect message as follows: "Information on the 3^{rd} page has not been successfully read out. Information on the 3^{rd} page might be corrupted."

After this, the file processing unit 101d causes the R/W unit 101b to sequentially read out the divided data file 104a with the identification name "0104. DAT" and the divided data file 104a with the identification name "0105. DAT". When they have been read out successfully, the file processing unit 101d causes these divided data files 104a to be outputted to the printer engine 200, as in the above case. As a result, the contents based on such divided data files 104a are printed on the fourth and fifth pages.

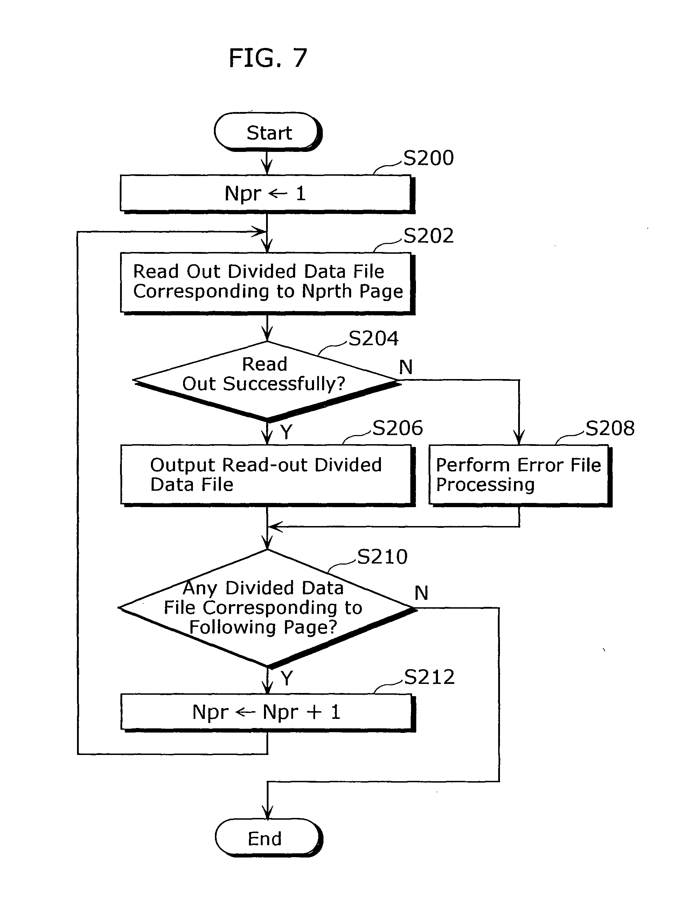

FIG. 7 is a flowchart showing processing operations performed by the file processing unit 101d.

First, the file processing unit 101d initializes the count number Npr of a built-in counter to 1 (Step S200), and causes the R/W unit 101b to read out a divided data file 104a on the Npr^{th} page from the storage unit 104 (Step S202). Here, the detection unit 101c detects whether such divided data file 104a to be read out from the storage unit 104 has been read out successfully or not.

Next, the file processing unit 101d judges whether the reading of the divided data file 104a in Step S202 has been performed successfully or not (Step S204). More specifically, the file processing unit 101d makes the above judgment based on a detection result from the detection unit 101c. When judging that the above reading has been performed successfully, based on the detection result from the detection unit 101c (Y in Step S204), the file processing unit 101d causes the divided data file 104a read out by the R/W unit 101b to be outputted to the printer engine 200 via the I/F unit 106 (Step S206). Meanwhile, when judging that the above reading has not been performed successfully (N in Step S204), the file processing unit 101d performs error file processing instead of causing the divided data file 104a read out by the R/W unit 101b to be outputted to the printer engine 200 (Step S208).

After the output of the divided data file 104a in Step S206 or after the execution of error file processing in Step S208, the file processing unit 101d judges whether or not there exists any divided data file 104a corresponding to a following page (Step S210). Here, when judging that there exists a divided data file 104a corresponding to a following page (Y in Step S210), the file processing unit 101d updates the count number Npr by adding 1 (Step S212), and repeatedly performs the operations starting from Step S202 again. Meanwhile, when judging that there is no divided data file 104a corresponding to a following page (No in Step S210), the file processing unit 101d terminates the above processing operations.

Note that in the present embodiment, a defect message is printed on a page corresponding to an error file as error file processing, but it is also possible to cause the printer engine 200 to output a page corresponding to an error file as a blank page. In this case, referring to FIG. 6, the file processing unit 101d causes the printer engine 200 to output, as a blank page, the third page corresponding to the divided data file 104a with the identification name "0103. DAT", an error file, without causing the printer engine 200 to print a defect message on the third page.

As described above, by causing the file processing unit 101d to execute error file processing, it becomes possible for the user to easily know that there is a defect in data reading. What is more, the user can easily specify a page where such defect has occurred.

### (First Variation)

Here, a description is given of the first variation of error file processing.

The file processing unit 101d according to the present variation prohibits the printer engine 200, as error file processing, to output a page corresponding to an error file.

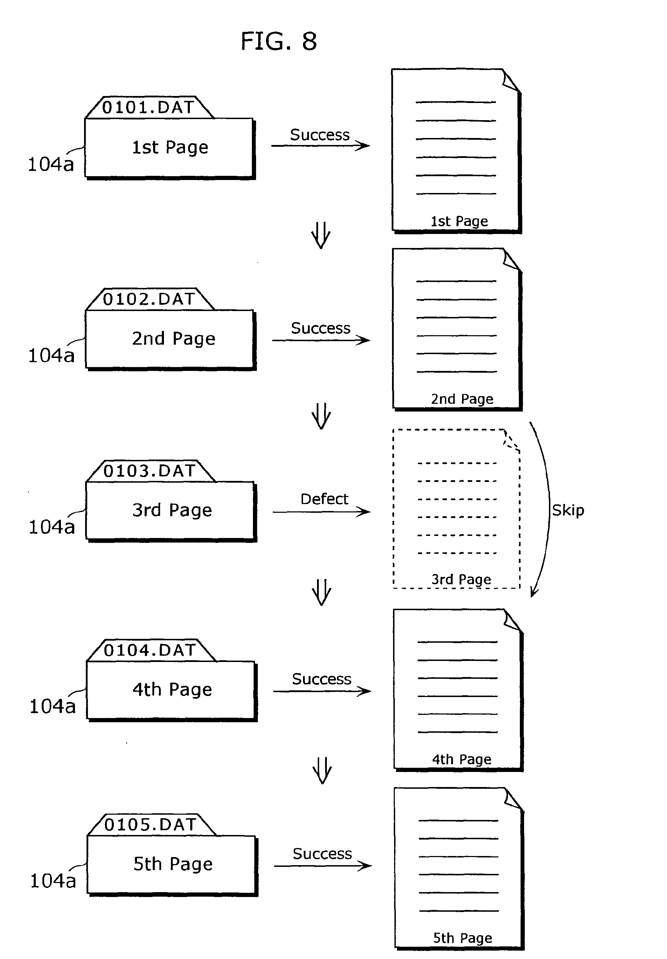

FIG. 8 is a diagram illustrating error file processing of prohibiting a page corresponding to an error file from being outputted.

The file processing unit 101d causes the R/W unit 101b to sequentially read out the divided data file 104a with the identification name "0101. DAT" and the divided data file 104a with the identification name "0102. DAT". When they have been read out successfully, the file processing unit 101d causes these divided data files 104a to be outputted to the printer engine 200. As a result, the contents based on such divided data files 104a are printed onto the first and second pages.

Next, when the file processing unit 101d causes the R/W unit 101b to read out the divided data file 104a with the identification name "0103. DAT" and the detection unit 101c detects that such reading has not been performed successfully, the file processing unit 101d prohibits the printer engine 200 from outputting a page corresponding to such divided data file 104a (error file). Accordingly, the third page is to be skipped.

After this, the file processing unit 101d causes the R/W unit 101b to sequentially read out the divided data file 104a with the identification name "0104. DAT" and the divided data file 104a with the identification name "0105. DAT". When they have been read out successfully, the file processing unit 101d causes these divided data files 104a to be outputted to the printer engine 200, as in the above case. As a result, the contents based on such divided data files 104a are printed onto the fourth and fifth pages.

As described above, according to the present variation, since a page corresponding to an error file is skipped, it becomes possible to quickly perform print processing as well as to save print papers.

### (Second Variation)

Here, a description is given of the second variation of error file processing.

The file processing unit 101d according to the present variation prompts the user, as error file processing, to select one of predetermined candidate processes for an error file, and causes the printer engine 200 to execute a process selected by the user. In other words, the file processing unit 101d according to the present variation also serves as process selection means. The above predetermined candidate processes include, for example, "force printing" process, "skip" process, and "suspend" process.

The "force printing" process is a process for causing the printer engine 200 to forcefully print the contents of an error file read out by the R/W unit 101b onto a page corresponding to such error file. The "skip" process is a process for prohibiting a page corresponding to an error file from being outputted, as in the case of the above-described first variation. The "suspend" process is a process for prohibiting the printer engine 200 from printing divided data file(s) 104a to be read out after an error file.

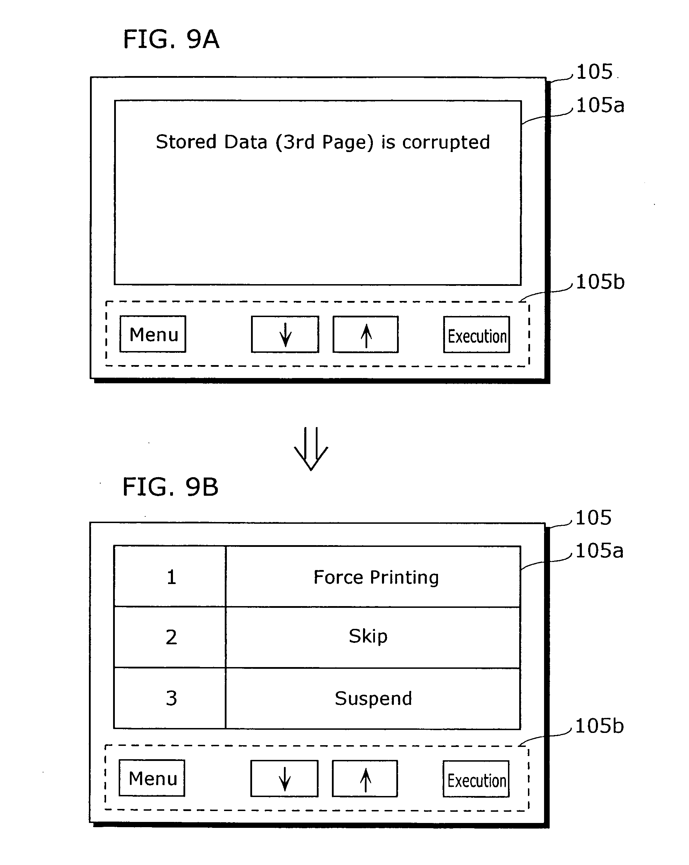

FIG. 9 is a diagram showing an example screen display of the display unit 105a when the above error file processing is executed.

When the detection unit 101c detects that there is a defect related to the reading of a divided data file 104a with the identification name "0103. DAT", the file processing unit 101b first causes the display unit 105a to display a message such as "Stored data (on the 3^{rd} page) is corrupted", as FIG. 9A shows.

Here, when the user operates one of the buttons of the operation unit 105b, the file processing unit 101d causes the display unit 105a to display a screen that prompts the user to select one of the "force printing" process, "skip" process, and "suspend" process according to an output signal from the operation unit 105b, as FIG. 9B shows.

Then, if the user operates the arrow buttons of the operation unit 105b to highlight the "force printing" process and then operates the execution button, the file processing unit 101d recognizes that the "force printing" process has been selected, according to an output signal from the operation unit 105b that has been outputted based on the above operations. As a result, the file processing unit 101d causes the divided data file 104a with the identification name "0103. DAT" that has been read out, although not properly, by the R/W 101b to be outputted to the printer engine 200 and causes such printer engine 200 to forcefully print, on the third page, the contents based on such divided data file 104a.

Meanwhile, if the user operates the arrow buttons of the operation unit 105b to highlight the "skip" process and then operates the execution button, the file processing unit 101d recognizes that the "skip" process has been selected, according to an output signal from the operation unit 105b that has been outputted based on the above operations. As a result, the file processing unit 101d causes a page corresponding to the divided data file 104a with the identification name "0103. DAT" to be skipped as described above.

Furthermore, if the user operates the arrow buttons of the operation unit 105b to highlight the "suspend" process and then operates the execution button, the file processing unit 101d recognizes that the "suspend" process has been selected, according to an output signal from the operation unit 105b that has been outputted based on the above operations. As a result, the file processing unit 101d prohibits the printer engine 200 from performing the printing that is based on the divided data file 104a with the identification name "0103. DAT", which is an error file, as well as on the divided data file 104a with the identification name "0104. DAT" and the divided data file 104a with the identification name "0105. DAT" that follow the error file. In other words, after causing the contents that are based on the respective divided data files 104a with the identification name "0101. DAT" and the identification name "0102. DAT" to be printed onto the first and second pages, the file processing unit 101d terminates the processing without causing the printing of the third to fifth pages to be performed.

As described above, the present variation is capable of improving user convenience by allowing the user to select a process for an error file.

### (Third Variation)

Here, a description is given of the third variation related to operations performed by the division unit 101a and detection unit 101c.

The division unit 101a and detection unit 101c according to the present variation perform recovery of an error file.

More specifically, when detecting that a divided data file 104a has not been successfully read out from the storage unit 104, the detection unit 101c identifies print data 401 and a page that correspond to such divided data file 104a. Then, the detection unit 101c specifies such identified print data 401 and page to the division unit 101a.

The division unit 101a, which has received the above specification, causes the host computer 400 to display a screen that prompts for the resending of the print data 401. When receiving the print data 401 that is sent from the host computer 400 via the I/F unit 106 based on an operation by the user who has seen such screen display, the division unit 101a extracts data corresponding only to the page specified by the detection unit 101c from the print data 401 that has been resent, and generates a divided data file 104a.

The division unit 101a, which has generated the division data file 104a in the above manner, causes the R/W unit 101b to write such generated divided data file 104a into the storage unit 104. When doing this, the R/W unit 101b deletes a divided data file 104a that is already written as an error file so as to write the above new divided data file 104a into the storage unit 104.

Through the above operations of the division unit 101a and detection unit 101c, it is possible to recover an error file stored in the storage unit 104.

The print control device according to the present invention has been described above using the embodiment and first to third variations, but the present invention is not limited to them.

For example, in the embodiment and first to third variations, the detection unit 101c detects whether a divided data file 104a has been read out successfully or not, on the basis of a data read error from the R/W unit 101b, but the detection unit 101c may perform detection on the basis of a checksum. More specifically, when generating a divided data file 104a, the division unit 101a adds a checksum to such divided data file 104a. This makes it possible for the detection unit 101c to detect whether the divided data file 104a has been read out successfully or not by verifying a checksum that is based on a result of reading performed by the R/W unit 101b against the checksum added to such divided data file 104a.

Furthermore, the detection unit 101c may detect whether a divided data file 104a has been read out successfully or not, based on data size. More specifically, when generating a divided data file 104a, the division unit 101a adds the data size of the divided data file 104a to such file. This makes it possible for the detection unit 101c to detect whether the divided data file 104a has been read out successfully or not by verifying the data size that is based on a result of reading performed by the R/W unit 101b against the data size added to such divided data file 104a.

Moreover, in the embodiment and first to third variations, the division unit 101a divides print data into individual pages so as to generate divided data files 104a, but the division unit 101a may divide print data into individual area smaller than page so as to generate each data included in each area as one divided data file 104a.

Furthermore, in the embodiment and first to third variations, the print control device 100 is equipped with memory print function, but it is possible to carry out the present invention if the print control device 100 is not equipped with memory print function. Also, regarding memory print function, a description has been given that print data 401 that has been used for printing remains stored in the storage unit 104 as a divided data file 104a for use of later printing without being deleted. However, it is also possible for print data 401 that has not been used for printing yet to remain stored for use of later printing. In this case, when sending print data 401, the host computer 400 outputs, together with the above-described memory execution signal, a print reservation signal that indicates that printing that is based on such print data 401 should not be immediately performed.

The division unit 101a of the print control device 100 that has received the above print reservation signal, only generates divided data files 104a and directs the R/W unit 101b to write them into the storage unit 104, without immediately performing print processing that is based on the print data 401 obtained from the host computer 400.

### Industrial Applicability

The print control device according to the present invention, which aims at preventing a print range from being limited due to a defect related to a part of print data, is applicable to a printer and the like.

## Claims

1. A print control device for controlling a printer engine that prints contents based on print data indicating the contents to be printed, comprising:
a division unit operable to obtain the print data from outside the print control device, and to divide the obtained print data into a plurality of files;
a storage unit having an area for storing the files;
a read and write unit operable to write, into the storage unit, the plurality of files obtained by the dividing performed by the division unit, and to read out the plurality of files stored in the storage unit that correspond to the print data;
a detection unit operable to detect, on a file-by-file basis, whether or not the reading has been successfully performed by the read and write unit; and
a file processing unit operable to output, to the printer engine, a file that has been detected by the detection unit as being read out successfully, and to cause the printer engine to print contents included in the file that has been detected as being read out successfully, out of the contents included in the print data.

2. The print control device according to Claim 1,
wherein the division unit divides the obtained print data into individual pages so as to generate, as one file, each information included in each of the pages.

3. The print control device according to Claim 2, further comprising
an error file processing unit operable to cause the printer engine to perform a predetermined process on a file that has been detected by the detection unit as not being read out successfully.

4. The print control device according to Claim 3,
wherein as the predetermined process, the error file processing unit causes the printer engine to output a page as a blank page, said page corresponding to the file that has not been read out successfully.

5. The print control device according to Claim 3,
wherein as the predetermined process, the error file processing unit causes the printer engine to print a message onto a page corresponding to the file that has not been read out successfully, said message informing a user that the print data cannot be read out successfully.

6. The print control device according to Claim 3,
wherein as the predetermined process, the error file processing unit prohibits the printer engine from outputting a page corresponding to the file that has not been read out successfully.

7. The print control device according to Claim 3, further comprising
a process selection unit operable to prompt a user to select a process to be performed on the file that has been detected by the detection unit as not being read out successfully,
wherein the error file processing unit causes the printer engine to perform the process selected by the user via the process selection unit.

8. The print control device according to Claim 7,
wherein the process selection unit presents, as a candidate for the selection, that the contents read out by the read and write unit should be forcefully printed for the file that has not been read out successfully.

9. The print control device according to Claim 2,
wherein the division unit (i) obtains the print data from outside the print control device, and when any of the pages included in the print data is specified, (ii) generates information included only in the specified page as a file, out of all information included in the obtained print data, and
the read and write unit writes said generated file into the storage unit.

10. The print control device according to Claim 9,
wherein the detection unit specifies, to the division unit, a page corresponding to a file that has been found as not being read out successfully as a result of the detection, and
the read and write unit writes, into the storage unit, the file that is generated by the division unit based on the specification, so that said generated file replaces the file that has not been read out successfully.

11. The print control device according to Claim 1,
wherein the division unit divides the obtained print data into individual areas smaller than page so as to generate, as one file, each information included in each of the areas.

12. A print control method for controlling a printer engine that prints contents based on print data indicating the contents to be printed, the method comprising:
a division step of obtaining the print data from outside a print control device, and dividing the obtained print data into a plurality of files;
a write step of writing, into a memory, the plurality of files obtained by the dividing performed in the division step;
a read step of reading out, from the memory, the plurality of files that correspond to the print data;
a detection step of detecting, on a file-by-file basis, whether or not the reading has been successfully performed in the read step;
and
a file processing step of outputting, to the printer engine, a file that has been detected in the detection step as being read out successfully, and causing the printer engine to print contents included in the file, out of the contents included in the print data.

13. The print control method according to Claim 12,
wherein in the division step, the obtained print data is divided into individual pages so as to generate, as one file, each information included in each of the pages.

14. The print control method according to Claim 13, further comprising
an error file processing step of causing the printer engine to perform a predetermined process on a file that has been detected in the detection step as not being read out successfully.

15. The print control method according to Claim 14,
wherein in the error file processing step, the printer engine is caused, as the predetermined process, to output a page as a blank page, said page corresponding to the file that has not been read out successfully.

16. The print control method according to Claim 14,
wherein in the error file processing step, the printer engine is caused, as the predetermined process, to print a message onto a page corresponding to the file that has not been read out successfully, said message informing a user that the print data cannot be read out successfully.

17. The print control method according to Claim 14,
wherein in the error file processing step, the printer engine is prohibited, as the predetermined process, from outputting a page corresponding to the file that has not been read out successfully.

18. The print control method according to Claim 12,
wherein in the division step, the obtained print data is divided into individual areas smaller than page so as to generate, as one file, each information included in each of the areas.

19. A program for controlling a printer engine that prints contents based on print data indicating the contents to be printed, the program causing a computer to execute:
a division step of obtaining the print data from outside a print control device, and dividing the obtained print data into a plurality of files;
a write step of writing, into a memory, the plurality of files obtained by the dividing performed in the division step;
a read step of reading out, from the memory, the plurality of files that correspond to the print data;
a detection step of detecting, on a file-by-file basis, whether or not the reading has been successfully performed in the read step;
and
a file processing step of outputting, to the printer engine, a file that has been detected in the detection step as being read out successfully, and causing the printer engine to print contents included in the file, out of the contents included in the print data.

20. The program according to Claim 19,
wherein in the division step, the obtained print data is divided into individual pages so as to generate, as one file, each information included in each of the pages.

21. The program according to Claim 20, further causing the computer to execute
an error file processing step of causing the printer engine to perform a predetermined process on a file that has been detected in the detection step as not being read out successfully.

22. The program according to Claim 21,
wherein in the error file processing step, the printer engine is caused, as the predetermined process, to output a page as a blank page, said page corresponding to the file that has not been read out successfully.

23. The program according to Claim 21,
wherein in the error file processing step, the printer engine is caused, as the predetermined process, to print a message onto a page corresponding to the file that has not been read out successfully, said message informing a user that the print data cannot be read out successfully.

24. The program according to Claim 19,
wherein in the division step, the obtained print data is divided into individual areas smaller than page so as to generate, as one file, each information included in each of the areas.

25. A printer comprising:
a printer engine that prints contents based on print data indicating the contents to be printed; and
a print control device that controls the printer engine,
wherein the print control device includes:
a division unit operable to obtain the print data from outside the print control device, and to divide the obtained print data into a plurality of files;
a storage unit having an area for storing the files;
a read and write unit operable to write, into the storage unit, the plurality of files obtained by the dividing performed by the division unit, and to read out the plurality of files stored in the storage unit that correspond to the print data;
a detection unit operable to detect, on a file-by-file basis, whether or not the reading has been successfully performed by the read and write unit; and
a file processing unit operable to output, to the printer engine, a file that has been detected by the detection unit as being read out successfully, and to cause the printer engine to print contents included in the file, out of the contents included in the print data.

26. The printer according to Claim 25,
wherein the division unit divides the obtained print data into individual pages so as to generate, as one file, each information included in each of the pages.

27. The printer according to Claim 26,
wherein the print control device further includes
an error file processing unit operable to cause the printer engine to perform a predetermined process on a file that has been detected by the detection unit as not being read out successfully.

28. The printer according to Claim 27,
wherein as the predetermined process, the error file processing unit causes the printer engine to output a page as a blank page, said page corresponding to the file that has not been read out successfully.

29. The printer according to Claim 27,
wherein as the predetermined process, the error file processing unit causes the printer engine to print a message onto a page corresponding to the file that has not been read out successfully, said message informing a user that the print data cannot be read out successfully.

30. The printer according to Claim 25,
wherein the division unit divides the obtained print data into individual areas smaller than page so as to generate, as one file, each information included in each of the areas.
